# EUROPÄISCHE PATENTSCHRIFT

(11) **EP 1 345 373 B1**
(45) Veröffentlichungstag und Bekanntmachung des Hinweises auf die Patenterteilung: **18.05.2005**
(21) Anmeldenummer: 02005509.1
(22) Anmeldetag: 11.03.2002
(51) Int. Cl.: H04L 12/66, H04L 29/12, H04L 29/06, H04L 12/58, H04M 3/533

(54) **Verfahren und Vorrichtung zum Aufbau einer Verbindung zwischen einem ersten und einem zweiten Teilnehmer in einem Telekommunikationsnetz**
"Method and apparatus for creating a connection between a first and a second subscriber in a telecommunications network"
"Procédé et appareil pour l'établissement d'une connexion entre un premier et un deuxième abonné dans un réseau de télécommunication"

(43) Veröffentlichungstag der Anmeldung: 17.09.2003
(73) Patentinhaber: SIEMENS AKTIENGESELLSCHAFT, 80333 München (DE)
(72) Erfinder: Kindermann, Robert, 1210 Wien (AT)
(74) Vertreter: Peham, Alois, Dipl.-Ing.

(56) Entgegenhaltungen:
- WO-A-01/86897
- US-A- 5 838 682
- US-A- 5 991 394
- US-B1- 6 185 605
- US-B1- 6 275 490
- PATENT ABSTRACTS OF JAPAN vol. 1999, no. 04, 30. April 1999 (1999-04-30) & JP 11 017734 A (MATSUSHITA ELECTRIC IND CO LTD), 22. Januar 1999 (1999-01-22)
- DATABASE EPODOC 21. November 2001 (2001-11-21), ALCATEL; DIEBOLT, FRANK: "Method for automatically returning a phone call upon receipt of an electronic mail and using directory inquiries services to obtain the phone number" XPEP-A-1156630

## Beschreibung

Die Erfindung betrifft ein Verfahren zum Aufbau einer Verbindung zwischen einem ersten und einem zweiten Teilnehmer eines Telekommunikationsnetzes,
- wobei ein für die Verwendung auf einem Computer vorgesehenes Objekt erstellt wird,
- wobei eine dem zweiten Teilnehmer im Telekommunikationsnetz zugeordnete Adresse in dieses Objekt eingefügt wird,
- wobei dieses Objekt zum ersten Teilnehmer übermittelt und dort auf einem Computer gespeichert wird,
- wobei mit Hilfe einer Funktion, die vom ersten Teilnehmer aktiviert wird, die dem zweiten Teilnehmer im Telekommunikationsnetz zugeordnete Adresse aus dem Objektes ausgelesen wird und
- wobei die Verbindung zwischen erstem und zweitem Teilnehmer mit Hilfe dieser Adresse aufgebaut wird.
Weiterhin betrifft die Erfindung eine Vorrichtung zur Durchführung des Verfahrens.

Das tägliche Leben im geschäftlichen aber auch privaten Bereich wird hinsichtlich der Kommunikationsmedien immer mehr durch das Transferieren elektronischer Dokumente bestimmt. Beispiele dafür sind etwa E-Mails, die zusätzlich beigefügte Dokumente praktisch beliebigen Typs enthalten können, sowie das aus dem Bereich des Internet bekannte Up- und Downloaden von Dateien. Dabei werden etwa Textdokumente, Bilder, Musik, Videos, Programme und ähnliches transferiert. Die Fülle der denkbaren Fälle macht eine auch nur nahezu vollständige Aufzählung an dieser Stelle unmöglich. Die angeführte Aufzählung kann daher nicht als Einschränkung verstanden werden. Im Folgenden wird daher der allgemeine Begriff "Objekt" an Stelle von genaueren Spezifizierungen verwendet.

Zentrales Problem bei dieser Art von Datenverkehr ist es, eine einfache Möglichkeit zu schaffen, mit dem Autor eines Objekts oder einer im Bezug auf dieses Objekt zur Auskunft befähigten Person Kontakt aufzunehmen. Zu diesem Zweck werden in der Regel Kontaktadressen in das Objekt aufgenommen, was bei Textdokumenten beispielsweise direkt als Teil des übermittelten Textes erfolgen kann. Neben rein textuellen Angaben werden aber auch automatisierte Kontaktmöglichkeiten geschaffen.

Aus der JP(A) 11017734, "Electronic mail device", vom 22.1.1999 ist dazu ein Gerät bekannt, welches den automatischen Aufbau einer Telefonverbindung zwischen Empfänger und Absender einer Email ermöglicht. Dazu umfasst das genannte Gerät Mittel zum Empfang der Telefonnummer des Absenders und eine Steuerung, welche die Telefonverbindung aufbaut.

Ein weiteres Beispiel sind sogenannte Links, mit Hilfe derer ein interessierter Benutzer automatisch auf eine Internetseite einer Kontaktperson geleitet werden kann. Auch das automatische Erstellen einer E-Mail stellt eine solche Möglichkeit dar. Bekannt ist auch das Aufbauen einer Gesprächsverbindung mit Hilfe eines speziellen Links, der auf eine Nebenstellenanlage, beziehungsweise eine diese steuernde Funktion verweist.

Ein Beispiel für ein solches Verfahren ist in der US-A-5838682, "Method an apparatus for establishing communications with a remote node on a switched network based on hypertext dialing information received from a packet network", vom 17.11.1998 offenbart. Dort wird ein Internet-Zugangssystem angegeben, welches eine Verbindung zu einem Gesprächspartner über ein verbindungsorientiertes Telekommunikationsnetz auf Wunsch automatisch herstellt, während die Verbindung zum Internet über ein paketvermittelndes Netz besteht. Dazu werden etwa in eine HTML-Datei Links eingefügt, mit welchen bei Aktivierung eine vorprogrammierte Telefonverbindung hergestellt wird.

Ein weiteres Beispiel ist die WO-A-0186897, "System for enabling one-click telephone connections", vom 15.11.2001 aus der bekannt ist, dass ein Email-Empfänger automatisch eine Sprachverbindung mit dem Absender dieser Email aufbauen kann. Dazu wird in einer Datenbank die Telefonnummer des Absenders gespeichert, ein entsprechender Link in das Email eingefügt und bei Aktivierung dieses Links mit Hilfe der Telefonnummer des Empfängers eine Sprachverbindung zwischen diesen aufgebaut.

Schließlich offenbart die US-A-5991394, "Method and system for establishing voice communications using a computer network", vom 23.1.1999 ein System, welches einem Benutzer die Möglichkeit gibt, über eine Internet-Seite einen Rückruf von einem mit dieser Seite assoziierten Gesprächspartner anzufordern. Dazu wird über eine zweite Seite die Telefonnummer des Benutzers angegeben und in Folge die Gesprächsverbindung aufgebaut.

Eine weitere Form der Angabe einer Kontaktmöglichkeit ist die Verwendung von sogenannten Attributen, die an ein Objekt angefügt werden. Diese sind im eigentlichen Sinne nicht Inhalt eines Objektes, sondern werden vielmehr an dieses angefügt, wenngleich das Objekt in der Regel nur als Ganzes, also mit Attributen transferiert werden kann. Für die Belange der vorliegenden Erfindung besteht ein Objekt also zumindest aus eigentlichem Inhalt und einem oder mehreren Attributen. Als Attribute können beispielsweise der Name einer Ansprechperson, deren physische Adresse oder E-Mail-Adresse, sowie weitere Angaben, etwa Speicherdatum, Dateigröße und ähnliches vorgesehen werden. Attribute liegen dabei zum Beispiel in einem sogenannte "Header-Bereich" eines Objektes.

Nach dem Stand der Technik existiert keine Möglichkeit, eine automatisierte Verbindung zu einem Gesprächspartner aufzubauen, ohne den Inhalt eines Objektes zu verändern. In der Regel muss daher eine als Attribut übermittelte Adresse eines Teilnehmers in einem Telekommunikationsnetz händisch eingegeben werden.

Der Erfindung liegt somit die Aufgabe zugrunde, ein Verfahren anzugeben, welches den Aufbau einer Verbindung zwischen einem ersten und einem zweiten Teilnehmer in einem Telekommunikationsnetz in einfacher Weise ermöglicht.

Dies geschieht erfindungsgemäß mit einem Verfahren der eingangs genannten Art, bei dem die dem zweiten Teilnehmer im Telekommunikationsnetz zugeordnete Adresse als Attribut an einen Inhalt des Objekts angefügt und von dort ausgelesen wird.

Vorteilhaft ist dabei der automatisierte Aufbau einer Verbindung zwischen einem ersten und einem zweiten Teilnehmer eines Telekommunikationsnetzes, wobei der zweite Teilnehmer im allgemeinen der Autor eines Objekts oder eine im Bezug auf dieses Objekt zur Auskunft befähigte Person ist. Dabei wird die dem zweiten Teilnehmer im Telekommunikationsnetz zugeordnete Adresse als Attribut in ein Objekt eingefügt, etwa durch den Autor selbst. In Folge wird dieses Objekt zum ersten Teilnehmer transferiert, beispielsweise per E-Mail, via Datenträger oder auch mittels Download von einer Internetseiten und dort transient oder permanent gespeichert. Zwecks Kontaktaufnahme mit dem zweiten Teilnehmer aktiviert der erste Teilnehmer danach eine Funktion, welche die dem zweiten Teilnehmer zugeordnete Adresse aus dem Attribut ausliest und die gewünschte Verbindung aufbaut. In der Regel wird dies eine Echtzeitkommunikationsverbindung sein, etwa eine Gesprächsverbindung oder eine Multimediaverbindung, denkbar ist natürlich auch das Versenden von Textnachrichten, beispielsweise mit Hilfe des Short Message Service, kurz SMS. Die Echtzeitkommunikation ist dabei nicht nur auf verbindungsorientierte Telekommunikationsnetze beschränkt, sondern erstreckt sich selbstverständlich auch auf paketvermittelte Telekommunikationsnetze.

Es wird darauf hingewiesen, dass als Computer in diesem Zusammenhang selbstverständlich auch Laptops, Palmtops und ähnliche Geräte, mit denen Objekte bearbeitet werden können, zu verstehen sind.

Die Aufgabe der Erfindung wird weiterhin mit einem Verfahren gelöst,
- wobei ein für die Verwendung auf einem Computer vorgesehenes Objekt erstellt wird,
- wobei eine dem zweiten Teilnehmer zugeordnete Identifikation in dieses Objekt eingefügt wird,
- wobei dieses Objekt zum ersten Teilnehmer übermittelt und dort auf einem Computer gespeichert wird,
- wobei mit Hilfe einer Funktion, die vom ersten Teilnehmer aktiviert wird, die dem zweiten Teilnehmer im Telekommunikationsnetz zugeordnete Adresse anhand der im Objekt enthaltenen Identifikation ermittelt wird,
- wobei die Verbindung zwischen erstem und zweitem Teilnehmer mit Hilfe dieser Adresse aufgebaut wird und
- wobei die dem zweiten Teilnehmer zugeordnete Identifikation als Attribut an einen Inhalt des Objekts angefügt und von dort ausgelesen wird.

Wesentlicher Unterschied zu der bereits angeführten Lösung ist hier das Einfügen einer Identifikation des zweiten Teilnehmers in das Attribut des Objektes, beispielsweise dessen Name, gegebenenfalls inklusive weiterer Information wie etwas dessen Adresse. Mit Hilfe dieser Identifikation wird durch eine Funktion die eigentliche Adresse des zweiten Teilnehmer im Telekommunikationsnetz ermittelt. Ein Mittel zur Zuordnung von Adresse zu Identifikation ist eine Tabelle, auf welche die Funktion zugreift. Im einfachsten Falle umfasst die Tabelle zwei Spalten, eine für beispielsweise den Namen eines Teilnehmers und eine für die diesem Teilnehmer zugeordnete Adresse im Telekommunikationsnetz. Als Speicherort für diese Tabelle ist einerseits jener Computer denkbar, auf dem auch die Funktion zum Aufbau der Verbindung aktiviert wird, andererseits aber auch jeder anderer Speicherort, zu dem dieser Computer Zugriff hat, etwa ein in einem Computernetz zentral verwaltetes Telefonverzeichnis oder ein Datenträger. Bei entsprechendem Aufbau der Identifikation ist die Ermittlung einer Adresse auch mit Hilfe eines Algorithmus denkbar. Beispielsweise kann ein erster Teil der Adresse mit Hilfe eines ersten Attributs ermittelt werden, ein zweiter Teil der Adresse mit einem zweiten Attribut.

Vorteilhaft ist es auch,
- wenn die im Attribut des Objektes enthaltene Identifikation mit Hilfe der vom ersten Teilnehmer aktivierten Funktion in das Telekommunikationsnetz übermittelt wird,
- wenn dort die Adresse des zweiten Teilnehmers anhand dieser Identifikation ermittelt wird und
- wenn die Verbindung zum zweiten Teilnehmer aufgebaut wird.

Bei dieser Variante der Erfindung erfolgt die Zuordnung Adresse/Identifikation des zweiten Teilnehmers im Telekommunikationsnetz selbst. In diesem Falle wird die Identifikation mit Hilfe der vom ersten Teilnehmer aktivierten Funktion in das Telekommunikationsnetz übermittelt und dort ausgewertet, beziehungsweise in Folge auch die Verbindung aufgebaut. Dies ist besonders dann von Vorteil, wenn die erforderlichen Daten von einem Betreiber eines Telekommunikationsnetzes zentral zur Verfügung gestellt werden oder es sich um eine firmeninterne Nebenstellenanlage handelt.

Vorteilhaft ist auch eine Variante der Erfindung,
- bei der als Objekt eine E-Mail vorgesehen wird,
- bei der als Identifikation eine E-Mail-Adresse des zweiten Teilnehmers herangezogen wird und
- bei der die Adresse des zweiten Teilnehmers im Telekommunikationsnetz anhand dieser E-Mail-Adresse ermittelt wird.

In diesem Falle wird vorteilhaft eine ohnehin vorhandene Identifikation des zweiten Teilnehmers herangezogen, um seine Adresse im Telekommunikationsnetz zu bestimmen. Somit kann mit dem Absender einer Nachricht nicht nur Kontakt aufgenommen werden, indem diese beantwortet wird, sondern auch dadurch, dass das erfindungsgemäße Verfahren angewandt wird. Für die Beantwortung wird also nicht dasselbe Übermittlungsverfahren herangezogen, wie für den Empfang der Nachricht, sondern ein anderes, nämlich das erfindungsgemäße Verfahren. Dies ist besonders dann von Vorteil, wenn die Beantwortung einer E-Mail weniger zweckmäßig erscheint, als mit dem Absender ein Telefonat zu führen.

Die Aufgabe der Erfindung wird weiterhin mit einem Computer gelöst, welcher zur Durchführung des erfindungsgemäßen Verfahrens vorgesehen ist,
- wobei dieser Mittel zum Aufbau einer Verbindung zwischen einem ersten und einem zweiten Teilnehmer anhand einer dem zweiten Teilnehmer zugeordneten Adresse beinhaltet,
- wobei dieser eine Funktion zum Auslesen der dem zweiten Teilnehmer zugeordnete Adresse aus einem Objekt dieses Computers umfasst und
- wobei die dem zweiten Teilnehmer zugeordnete Adresse als Attribut an einen Inhalt des Objekts angefügt ist.

Es wird ein Vorrichtung angegeben, mit welcher der automatisierte Aufbau einer Verbindung zwischen einem ersten und einem zweiten Teilnehmer eines Telekommunikationsnetzes möglich wird, wobei der zweite Teilnehmer im allgemeinen der Autor eines Objekts oder einer im Bezug auf dieses Objekt zur Auskunft befähigte Person ist. Dabei umfasst das Attribut eines Objekts die dem zweiten Teilnehmer im Telekommunikationsnetz zugeordnete Adresse. Diese dient beispielsweise als Eingangsparameter eines im Computer integrierten Modems.

Es wird darauf hingewiesen, dass die beim Verfahren genannten Vorteile auch gleichermaßen für die Vorrichtung gelten, sowie dass als Computer auch artverwandte Gerät gelten, etwa Laptops, Palmtops und ähnliches, sowie Mobiltelefone, soweit diese zur Verwaltung von Objekten geeignet sind.

Die Aufgabe der Erfindung wird schließlich mit einem Computer gelöst, welcher zur Durchführung des erfindungsgemäßen Verfahrens vorgesehen ist,
- wobei dieser Mittel zum Aufbau einer Verbindung zwischen einem ersten und einem zweiten Teilnehmer anhand einer dem zweiten Teilnehmer zugeordneten Adresse beinhaltet,
- wobei dieser eine Funktion zum Auslesen einer dem zweiten Teilnehmer zugeordnete Identifikation aus einem Objekt dieses Computers umfasst,
- wobei dieser eine Funktion zur Ermittlung der dem zweiten Teilnehmer zugeordnete Adresse anhand dieser Identifikation umfasst und
- wobei die dem zweiten Teilnehmer zugeordnete Adresse als Attribut an einen Inhalt des Objekts angefügt ist.

Wesentlicher Unterschied zu der bereits angeführten Lösung ist hier, dass im Attribut des Objektes nicht die Adresse eines zweiten Teilnehmers selbst enthalten ist, sondern eine ihm zugeordnete Identifikation. Der Computer umfasst in diesem Fall also eine Funktion zum Auslesen der Identifikation aus dem Attribut, sowie eine weitere Funktion zur Zuordnung einer Adresse des zweiten Teilnehmers im Telekommunikationsnetz zu dieser Identifikation. Die Trennung in zwei separate Funktionen ist dabei nicht zwingend erforderlich. Vielmehr können beide Aufgaben auch von ein und derselben Funktion übernommen werden.

Die Erfindung wird anhand eines in den Figuren dargestellten Ausführungsbeispiels näher erläutert, welches den Aufbau einer Verbindung zwischen einem ersten und einem zweiten Teilnehmer in einem Telekommunikationsnetz unter Zuhilfenahme von erfindungsgemäßen Objekten und Funktionen betrifft.

Es zeigen:
Figur 1: einen Computer PC, in dem verschiedene erfindungsgemäße Objekte OBJ und Funktionen F verwaltet werden;
Figur 2: ein Ablaufdiagramm einer beispielhaften, erfindungsgemäßen Funktion F zum Aufbau einer Verbindung;

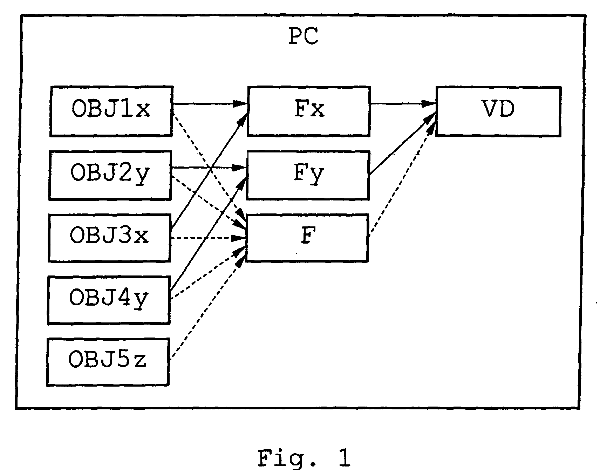

Figur 1 zeigt einen Computer PC, in dem verschiedene erfindungsgemäße Objekte OBJ und Funktionen F verwaltet werden. Diese sind ein erstes Objekt vom Typ x OBJ1x, ein zweites Objekt vom Typ y OBJ2y, ein drittes Objekt vom Typ x OBJ3x, ein viertes Objekt vom Typ y OBJ4y und ein fünftes Objekt vom Typ z OBJ5z. Darüber hinaus werden im Computer PC eine erste Funktion Fx, eine zweite Funktion Fy und eine dritte Funktion F, sowie ein Vermittlungsdienst VD verwaltet.

Die Funktion der in der Figur 1 dargestellten Anordnung ist wie folgt:

Alle Objekte vom Typ x, im konkreten Fall das erste Objekt OBJ1x und das dritte Objekt OBJ3x, können mit Hilfe der ersten Funktion Fx bearbeitet werden, andere Typen jedoch nicht. Dieser Umstand wird mit durchgezogen gezeichneten Pfeile symbolisiert. Beispielsweise kann die erste Funktion Fx innerhalb eines Textverarbeitungsprogramms zur Verfügung stehen. Der Inhalt der Objekte des Typs x besteht in diesem Falle aus Texten. Zusätzlich beinhalten die Objekte auch Attribute, die zum Aufbau einer Verbindung geeignet sind.

Alle Objekte vom Typ y, im konkreten Fall das zweite Objekt OBJ2y und das vierte Objekt OBJ4y, können mit Hilfe der zweiten Funktion Fy bearbeitet werden, andere Typen jedoch nicht. Dieser Umstand wird mit durchgezogen gezeichneten Pfeilen symbolisiert. Beispielsweise können für Objekte des Typs y grafische Datenformate vorgesehen sein.

Schließlich wird im Computer PC auch eine dritte Funktion F verwaltet, die zur Bearbeitung aller drei vorhanden Typen geeignet ist. In der Regel wird sich die Bearbeitung in diesem Falle auf jene Verfahrensschritte beschränken, die für den Aufbau einer Verbindung in einem Telekommunikationsnetz erforderlich sind. Welche Objekte OBJ als Eingang für die dritte Funktion F geeignet sind, wird durch strichliert gezeichnete Pfeile symbolisiert. Im konkreten Fall kann das erfindungsgemäße Verfahren auf das fünfte Objekt OBJ5z nur mit Hilfe der dritten Funktion F angewandt werden. Dies ist beispielsweise dann der Fall wenn ein für die Bearbeitung von Objekten des Typs z vorgesehenes Programm keine erfindungsgemäße Funktion umfasst. Um einem Nutzer eines Computers PC das erfindungsgemäße Verfahren trotzdem zugänglich zu machen, kann ein eigens für diesen Zweck erstelltes Programm zur Verfügung gestellt werden.

Alle drei Funktionen F leiten die Anforderung zum Aufbau einer Verbindung an den Vermittlungsdienst VD weiter, der zentrale, von den verschiedenen Typen unabhängige, Aufgaben übernimmt. Dies kann unter anderem zum Beispiel die Steuerung eines Modems sein.

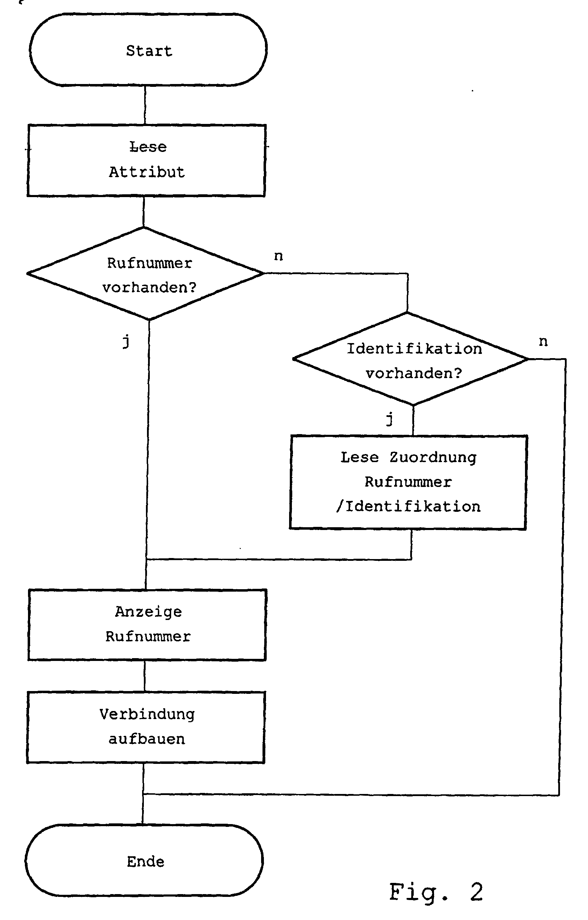

Die Figur 2 zeigt ein Ablaufdiagramm einer beispielhaften, erfindungsgemäßen Funktion F zum Aufbau einer Verbindung.

Die Funktion des in der Figur 2 dargestellten Ablaufdiagramms ist wie folgt:

Ausgehend von einem Zustand Start beginnt der durch den ersten Teilnehmer initiierte Ablauf der Funktion F. Zu Beginn werden die im Objekt enthaltenen Attribute ausgelesen. Danach wird überprüft, ob darin eine Rufnummer zu einem Teilnehmer eines Telekommunikationsnetzes enthalten ist. Trifft dies zu, so wird dem ersten Teilnehmer die Rufnummer angezeigt und in Folge die Verbindung zum zweiten Teilnehmer aufgebaut. Sodann wechselt die Funktion in den Zustand Ende.

Kann keine Rufnummer ausgelesen werden, so wird überprüft, ob eine dem zweiten Teilnehmer zugeordnete Identifikation als Attribut enthalten ist. Wenn ja, dann wird mit Hilfe einer Tabelle die dem zweiten Teilnehmer zugeordnete Rufnummer anhand dieser Identifikation ermittelt. In Folge wird wiederum die Rufnummer angezeigt, die Verbindung zum zweiten Teilnehmer aufgebaut und in den Zustand Ende gewechselt.

Ist jedoch weder eine Rufnummer als Attribut enthalten, noch eine Identifikation, mit der die Rufnummer des zweiten Teilnehmers ermittelt werden kann, so wird der Funktionsablauf direkt zum Zustand Ende verzweigt.

## Patentansprüche

1. Verfahren zum Aufbau einer Verbindung zwischen einem ersten und einem zweiten Teilnehmer eines Telekommunikationsnetzes,
- wobei ein für die Verwendung auf einem Computer PC vorgesehenes Objekt OBJ erstellt wird,
- wobei eine dem zweiten Teilnehmer im Telekommunikationsnetz zugeordnete Adresse in dieses Objekt OBJ angefügt wird,
- wobei dieses Objekt OBJ zum ersten Teilnehmer übermittelt und dort auf einem Computer PC gespeichert wird,
- wobei mit Hilfe einer Funktion F, die vom ersten Teilnehmer aktiviert wird, die dem zweiten Teilnehmer im Telekommunikationsnetz zugeordnete Adresse aus dem Objektes OBJ ausgelesen wird und
- wobei die Verbindung zwischen erstem und zweitem Teilnehmer mit Hilfe dieser Adresse aufgebaut wird,
**dadurch gekennzeichnet,**
- **dass** die dem zweiten Teilnehmer im Telekommunikationsnetz zugeordnete Adresse als Attribut an einen Inhalt des Objekts OBJ angefügt und von dort ausgelesen wird.

2. Verfahren zum Aufbau einer Verbindung zwischen einem ersten und einem zweiten Teilnehmer eines Telekommunikationsnetzes,
- wobei ein für die Verwendung auf einem Computer PC vorgesehenes Objekt OBJ erstellt wird,
- wobei eine dem zweiten Teilnehmer zugeordnete Identifikation in dieses Objekt OBJ angefügt wird,
- wobei dieses Objekt OBJ zum ersten Teilnehmer übermittelt und dort auf einem Computer PC gespeichert wird,
- wobei mit Hilfe einer Funktion F, die vom ersten Teilnehmer aktiviert wird, die dem zweiten Teilnehmer im Telekommunikationsnetz zugeordnete Adresse anhand der im Objekt OBJ enthaltenen Identifikation ermittelt wird und
- wobei die Verbindung zwischen erstem und zweitem Teilnehmer mit Hilfe dieser Adresse aufgebaut wird,
**dadurch gekennzeichnet,**
- **dass** die dem zweiten Teilnehmer zugeordnete Identifikation als Attribut an einen Inhalt des Objekts OBJ angefügt und von dort ausgelesen wird.

3. Verfahren nach Anspruch 2, **dadurch gekennzeichnet,**
- **dass** die im Attribut des Objektes OBJ enthaltene Identifikation mit Hilfe der vom ersten Teilnehmer aktivierten Funktion F in das Telekommunikationsnetz übermittelt wird,
- **dass** dort die Adresse des zweiten Teilnehmers anhand dieser Identifikation ermittelt wird und
- **dass** die Verbindung zum zweiten Teilnehmer aufgebaut wird.

4. Verfahren nach einem der Ansprüche 1 bis 3, **dadurch gekennzeichnet,**
- **dass** als Objekt OBJ eine E-Mail vorgesehen wird
- **dass** als Identifikation eine E-Mail-Adresse des zweiten Teilnehmers herangezogen wird und
- **dass** die Adresse des zweiten Teilnehmers im Telekommunikationsnetz anhand dieser E-Mail-Adresse ermittelt wird.

5. Computer PC, welcher zur Durchführung eines Verfahrens nach einem der Ansprüche 1 bis 4 eingerichtet ist,
- wobei dieser Mittel zum Aufbau einer Verbindung zwischen einem ersten und einem zweiten Teilnehmer anhand einer dem zweiten Teilnehmer zugeordneten Adresse beinhaltet und
- wobei dieser eine Funktion zum Auslesen der dem zweiten Teilnehmer zugeordnete Adresse aus einem Objekt OBJ dieses Computers PC umfasst,
**dadurch gekennzeichnet,**
- **dass** die dem zweiten Teilnehmer zugeordnete Adresse als Attribut an einen Inhalt des Objekts OBJ angefügt ist.

6. Computer PC, welcher zur Durchführung eines Verfahrens nach einem der Ansprüche 1 bis 4 eingerichtet ist,
- wobei dieser Mittel zum Aufbau einer Verbindung zwischen einem ersten und einem zweiten Teilnehmer anhand einer dem zweiten Teilnehmer zugeordneten Adresse beinhaltet,
- wobei dieser eine Funktion F zum Auslesen einer dem zweiten Teilnehmer zugeordnete Identifikation aus einem Objekt OBJ dieses Computers PC umfasst und
- wobei dieser eine Funktion F zur Ermittlung der dem zweiten Teilnehmer zugeordnete Adresse anhand dieser Identifikation umfasst,
**dadurch gekennzeichnet,**
- **dass** die dem zweiten Teilnehmer zugeordnete Adresse als Attribut an einen Inhalt des Objekts OBJ angefügt ist.

## Claims

1. Method for setting up a connection between a first subscriber and a second subscriber of a telecommunications network,
- an object OBJ intended for use on a computer PC being created,
- an address assigned to the second subscriber in the telecommunications network being inserted into this object OBJ,
- this object OBJ being communicated to the first subscriber and being stored there on a computer PC,
- the address assigned to the second subscriber in the telecommunications network being read out from the object OBJ with the aid of a function F which is activated by the first subscriber, and
- the connection between first and second subscriber being set up with the aid of this address,
**characterised in that**
- the address assigned to the second subscriber in the telecommunications network is added as attribute to contents of the object OBJ and is read out therefrom.

2. Method for setting up a connection between a first subscriber and a second subscriber of a telecommunications network,
- an object OBJ intended for use on a computer PC being. created,
- an identification assigned to the second subscriber being inserted into this object OBJ,
- this object OBJ being communicated to the first subscriber and being stored there on a computer PC,
- the address assigned to the second subscriber in the telecommunications network being determined with the aid of a function F, which is activated by the first subscriber, using the identification incorporated in the object OBJ, and
- the connection between first and second subscriber being set up with the aid of this address,
**characterised in that**
- the identification assigned to the second subscriber is added as attribute to contents of the object OBJ and is read out therefrom.

3. Method according to Claim 2, **characterised in that**
- the identification incorporated in the attribute of the object OBJ is communicated, with the aid of the function F activated by the first subscriber, to the telecommunications network,
- there the second subscriber's address is determined using this identification, and
- the connection to the second subscriber is set up.

4. Method according to one of Claims 1 to 3, **characterised in that**
- the object OBJ is an e-mail,
- an e-mail address of the second subscriber is used as identification, and
- the address of the second subscriber in the telecommunications network is determined using this e-mail address.

5. Computer PC, which is configured to carry out a method according to one of Claims 1 to 4,
- said computer including means for setting up a connection between a first subscriber and a second subscriber using an address assigned to the second subscriber, and
- said computer comprising a function for reading the address assigned to the second subscriber out from an object OBJ of said computer PC,
**characterised in that**
- the address assigned to the second subscriber is added as attribute to contents of the object OBJ.

6. Computer PC, which is configured to carry out a method according to one of Claims 1 to 4,
- said computer including means for setting up a connection between a first subscriber and a second subscriber using an address assigned to the second subscriber, and
- said computer comprising a function F for reading an identification assigned to the second subscriber out from an object OBJ of said computer PC, and
- said computer comprising a function F for determining the address assigned to the second subscriber using this identification,
**characterised in that**
- the address assigned to the second subscriber is added as attribute to contents of the object OBJ.

## Revendications

1. Procédé d'établissement d'une connexion entre un premier et un deuxième abonné d'un réseau de télécommunication,
- dans lequel on établit un objet OBJ prévu pour l'utilisation sur un ordinateur PC,
- dans lequel on adjoint à cet objet OBJ une adresse associée au deuxième abonné du réseau de télécommunication,
- dans lequel on transmet cet objet au OBJ au premier abonné et on l'y mémorise sur un ordinateur PC,
- dans lequel on lit à l'aide d'une fonction F qui est activée par le premier abonné, l'adresse, associée au deuxième abonné dans le réseau de télécommunication, dans l'objet OBJ et,
- dans lequel on établit la connexion entre le premier et le deuxième abonné à l'aide de cette adresse,
**caractérisé**
- **en ce que** l'adresse, associée au deuxième abonné dans le réseau de télécommunication, est adjointe comme attribut à un contenu de l'objet OBJ et y est lue.

2. Procédé d'établissement d'une connexion entre un premier et un deuxième abonné d'un réseau de télécommunication,
- dans lequel on établit un objet OBJ prévu pour l'utilisation sur un ordinateur PC,
- dans lequel on adjoint à cet objet OBJ une identification associée au deuxième abonné du réseau de télécommunications,
- dans lequel on transmet cet objet au OBJ au premier abonné et on l'y mémorise sur un ordinateur PC,
- on détermine au moyen de l'identification contenue dans l'objet OBJ, à l'aide d'une fonction F qui est activée par le premier abonné, l'adresse associée au deuxième abonné dans le réseau de télécommunication et
- dans lequel on établit la connexion entre le premier et le deuxième abonné à l'aide de cette adresse,
**caractérisé**
- **en ce que** l'identification associée au deuxième abonné est adjointe comme attribut à un contenu de l'objet OBJ et y est lue.

3. Procédé suivant la revendication 2,
**caractérisé**
- **en ce que** l'on transmet l'identification contenue dans l'attribut de l'objet OBJ à l'aide de la fonction F activée par le premier abonné au réseau de télécommunication,
- **en ce que** l'on y détermine l'adresse du deuxième abonné au moyen de cette identification et
- **en ce que** l'on établit la connexion vers le deuxième abonné.

4. Procédé suivant l'une des revendications 1 à 3,
**caractérisé**
- **en ce qu'**il est prévu comme objet (OBJ) un e-mail,
- **en ce que** l'on utilise comme identification une adresse e-mail du deuxième abonné et
- **en ce que** l'on détermine l'adresse du deuxième abonné dans le réseau de télécommunication au moyen de cette adresse e-mail.

5. Ordinateur (PC) qui est conçu pour la mise en oeuvre du procédé suivant l'une des revendications 1 à 4,
- dans lequel celui-ci comporte des moyens d'établissement d'une connexion entre un premier et un deuxième abonné au moyen d'une adresse associée au deuxième abonné et
- dans lequel celui-ci comprend une fonction de lecture de l'adresse, associée au deuxième abonné, dans un objet OBJ de cet ordinateur PC,
**caractérisé**
- **en ce que** l'adresse, associée au deuxième abonné, est adjointe en tant qu'attribut à un contenu de l'objet (OBJ).

6. Ordinateur (PC) qui est conçu pour la mise en ceuvre du procédé suivant l'une des revendications 1 à 4,
- dans lequel celui-ci comporte des moyens d'établissement d'une connexion entre un premier et un deuxième abonné au moyen d'une adresse associée au deuxième abonné et
- dans lequel celui-ci comprend une fonction de lecture de l'adresse, associée au deuxième abonné, dans un objet OBJ de cet ordinateur PC,
- dans lequel celui-ci comprend une fonction F de détermination de l'adresse, associée au deuxième abonné, au moyen de cette identification,
**caractérisé**
- **en ce que** l'adresse, associée au deuxième abonné, est adjointe en tant qu'attribut à un contenu de l'objet OBJ.
